# FASCICULE DE BREVET EUROPEEN

(11) **EP 0 682 875 B1**
(45) Date de publication et mention de la délivrance du brevet: **28.02.2001**
(21) Numéro de dépôt: 95200910.8
(22) Date de dépôt: 11.04.1995
(51) Int. Cl.: A23L 1/16, A21C 11/20

(54) **Fabrication de pâtes alimentaires**
Herstellung von Teigwaren
Production of food doughs

(30) Priorité: 28.04.1994 CH 132494
(43) Date de publication de la demande: 22.11.1995
(73) Titulaire: SOCIETE DES PRODUITS NESTLE S.A., 1800 Vevey (CH)
(72) Inventeur: Juengling, Daniele, CH-1800 Vevey (CH); Hauser, Thomas Wilhelm, I-84025 Eboli (IT); Lechthaler, Jurg, CH-8304 Wallisellen (CH); Rusconi, Luca, CH-8400 Winterthur (CH); Dos Santos Pousa, Armando, Singapore 2367 (SG); Meyer, Philippe Paul, CH-8121 Benglen (CH)
(74) Mandataire: Wavre, Claude-Alain

(56) Documents cités:
- EP-A- 0 398 315
- EP-A- 0 404 388
- EP-A- 0 471 103
- EP-A- 0 545 056
- EP-A- 0 599 535
- WO-A-90/05452
- FR-A- 2 285 987
- US-A- 4 938 127
- PATENT ABSTRACTS OF JAPAN vol. 014 no. 270 (C-727) ,12 Juin 1990 & JP-A-02 079963 (MASAO KOBAYASHI) 20 Mars 1990,
- PATENT ABSTRACTS OF JAPAN vol. 017 no. 364 (C-1081) ,9 Juillet 1993 & JP-A-05 056752 (JAPAN STEEL WORKS LIMITED) 9 Mars 1993,
- DATABASE WPI Week 8716 Derwent Publications Ltd., London, GB; AN 87-112883 & JP-A-62 058 978 (YG MATSUBE) , 14 Mars 1987

## Description

La présente invention a pour objet un procédé de fabrication de pâtes alimentaires dans lequel on prépare un mélange de farine ou semoule de céréale et d'eau présentant une teneur en eau de 25-40%, on pétrit le mélange et on l'extrude, ainsi qu'un appareil pour la mise en oeuvre de ce procédé.

US 5126159 (BUEHLER AG) décrit un procédé pour la fabrication de pâtes alimentaires où les trois opérations de mélange, pétrissage et extrusion sont réalisées en continu dans trois dispositifs distincts, branchés en série, d'une même installation. La semoule et l'eau y sont dosées directement dans un mélangeur rapide à ailettes qui délivre un mélange sous forme de grumeaux de semoule humidifiée. Ces grumeaux sont introduits dans un dispositif de pétrissage formé de deux vis tournant dans le même sens et s'engrenant l'une dans l'autre, où ils sont transformés en une pâte d'apparence sèche et friable. Cette pâte est introduite dans une extrudeuse à une vis où elle est pressée au travers d'une filière sous la pression exercée par la vis, en forme de pâtes alimentaires de section déterminée par la forme des ouvertures de la filière.

US 5186539 (BUEHLER AG) décrit un procédé pour la fabrication de pâtes alimentaires où les deux opérations de mélange et pétrissage sont réalisées dans un même dispositif, formé de deux vis tournant dans le même sens et s'engrenant l'une dans l'autre, et où l'opération d'extrusion est réalisée dans un dispositif distinct, à savoir une extrudeuse à une vis alimentée par le premier dispositif.

US 5139806 (NESTEC S.A.) décrit un procédé pour la fabrication de pâtes alimentaires où les trois opérations de mélange, pétrissage et extrusion sont réalisées en continu dans un dispositif unique à deux vis tournant dans le même sens et s'engrenant l'une dans l'autre, la pression nécessaire pour presser la pâte au travers de la filière étant exercée par le dispositif à deux vis lui-même.

Chacun des trois procédés cités ci-dessus représente une étape significative vers la simplification et la réalisation en un temps toujours plus court de la fabrication de pâtes alimentaires. Cependant, le dernier de ces procédés, apparemment le plus simple et le plus rapide, soumet ledit dispositif à deux vis à de fortes contraintes puisqu'il doit supporter seul tous les efforts et développer seul toutes les énergies nécessaires aux opérations de mélange, pétrissage et extrusion, sans compter le fait qu'il soumet la pâte à un fort cisaillement.

JP-A 62 058 978 (YG MATSUBE) décrit un appareil pour doser et mélanger ensemble deux produits alimentaires pâteux de manière à produire un boudin marbré, les deux produits pâteux étant malaxés chacun dans un extrudeur bivis et dosés chacun par une pompe à engrenage dans un dispositif mélangeur unique comprenant un brasseur à palette débouchant sur un tube de sortie unique.

EP-A-0 545 056 (CORNTNG INCORPORATED) décrit un appareil pour la production d'objets solides à partir de poudre de verre, céramique, métal, carbone ou autre par extrusion assistée par une pompe à engrenage.

La présente invention a pour but de proposer un procédé de fabrication de pâtes alimentaires et un appareil pour sa mise en oeuvre qui soient simples, consomment relativement peu d'énergie et ne soumettent ledit mélange de farine ou semoule de céréale et d'eau qu'à un relativement faible cisaillement.

A cet effet, le procédé de fabrication de pâtes alimentaires selon la présente invention, dans lequel on prépare un mélange de farine ou semoule de céréale et d'eau présentant une teneur en eau de 25-40%, on pétrit le mélange et on l'extrude, les opérations de mélange et/ou pétrissage étant réalisées dans un dispositif à deux vis tournant dans le même sens et s'engrenant l'une dans l'autre et la température du mélange étant tenue à une température inférieure à 55°C durant toutes les opérations, se distingue par le fait que l'on extrude le mélange en le pressant au travers d'une filière d'extrusion à l'aide d'une pompe à engrenage, on maintient en amont de la pompe une pression inférieure ou égale à 30 bar et la pression exercée par la pompe sur le mélange pour le presser au travers de la filière est de 50-120 bar.

De même, l'appareil pour la mise en oeuvre du procédé selon la présente invention, qui comprend un dispositif de mélange et/ou pétrissage (1) comprenant deux vis (4) tournant dans le même sens et s'engrenant l'une dans l'autre, et une filière d'extrusion (3), les vis (4) présentant en alternance et/ou en succession des zones de mélange (5), compression (14), pétrissage (6) et/ou retenue (15), se distingue par le fait qu'il comprend en outre une pompe à engrenage (2), lesdites deux vis (4) sont renfermées dans un fourreau à double paroi (7) subdivisé en compartiments (i-v) dans lesquels on peut faire circuler un fluide de refroidissement ou de réchauffement, et la pompe à engrenage (2) et la filière (3) sont enfermées dans un manteau à double paroi (7) subdivisé en compartiments (vii-ix) dans lesquels on peut faire circuler un fluide de refroidissement ou de réchauffement.

On a constaté en effet avec surprise qu'il est possible de fabriquer ainsi des pâtes alimentaires présentant des qualités organoleptiques à tout le moins comparables à celles de pâtes alimentaires fabriquées par un procédé traditionnel, malgré le fait que la pâte obtenue par lesdites opérations de mélange et/ou pétrissage passe ensuite au travers d'une pompe à engrenage et que cette pâte y soit soumise brièvement à des contraintes sévères dont on pourrait craindre qu'elles n'abîment sa texture, notamment en détruisant ou en affaiblissant le réseau de gluten établi lors de l'opération du pétrissage.

En effet, entre les dents d'une pompe à engrenage comprenant deux roues ou rouleaux dentés qui s'engrènent l'un dans l'autre, la pâte peut subir une compression de plusieurs centaines de bar durant une fraction de seconde, par exemple.

Le fait que la texture du mélange soumis à de telles contraintes, ou plus précisément à une telle compression, ne soit pas endommagée mais qu'au contraire un réseau de gluten puisse être parfaitement maintenu, voire développé par ce passage au travers d'une pompe à engrenage, semble bien représenter l'un des aspects les plus surprenants de la présente invention.

On a constaté également que l'on peut fabriquer ainsi des pâtes alimentaires dans un temps pratiquement aussi court, notamment en moins d'une minute, mais en dépensant notablement moins d'énergie qu'en mettant en oeuvre le procédé selon US 5139806, par exemple.

On a constaté enfin que l'on peut même fabriquer ainsi des pâtes alimentaires à temps de cuisson plus long avec une matière première de même qualité ou des pâtes alimentaires à temps de cuisson identique avec une matière première de moindre qualité.

Pour mettre en oeuvre le présent procédé, on peut utiliser une farine ou semoule de céréale, notamment une semoule de blé dur présentant une granulométrie de 250-350 µm ou une farine de blé tendre présentant une granulométrie de 50-150 µm, additionnée ou non d'ingrédients tels que du jaune d'oeuf, du chlorure de sodium et/ou des épices, par exemple.

Lorsqu'on utilise une farine à granulométrie fine, notamment de 50-150 µm, on peut éventuellement prévoir une étape de prémélange, notamment dans un mélangeur à ailettes rapide qui délivre un prémélange sous forme de grumeaux de farine humidifiée.

On mélange cette farine ou semoule de céréale avec une quantité d'eau telle que le mélange obtenu présente une teneur en eau de 25-40 %, de préférence 30-35% en poids.

Afin de produire des pâtes alimentaires crues et non précuites, on peut veiller à ce que la température du mélange au cours des opérations demeure inférieure à la température de gélatinisation de l'amidon de la céréale utilisée. On peut également éviter d'endommager le gluten en ne laissant pas la température du mélange monter à des valeurs trop élevées. C'est ainsi qu'on tient la température du mélange à une valeur inférieure à 55°C, voire inférieure à 50°C, au cours de toutes les opérations.

Dans le même ordre d'idée, on peut réaliser les opérations de mélange et/ou pétrissage dans un dispositif à deux vis tournant dans le même sens et s'engrenant l'une dans l'autre dans des conditions telles que ledit mélange de farine ou semoule de céréale et d'eau ne soit soumis qu'à un relativement faible cisaillement.

Lesdites deux vis peuvent être les vis d'une extrudeuse ou d'un malaxeur bivis, par exemple, dont le dessin général ou l'arrangement et/ou l'agencement des divers éléments qui les composent, notamment des palettes ou bilobes de mélange et/ou pétrissage, sont tels que lesdites opérations de mélange et/ou pétrissage puissent être réalisées en ne soumettant ledit mélange de farine ou semoule de céréale et d'eau qu'à un relativement faible cisaillement.

On peut réaliser lesdites opérations de mélange et/ou pétrissage en un temps de séjour de 20-60 s dans ladite extrudeuse ou ledit malaxeur, sous une pression relativement faible, notamment inférieure ou égale à 30 bar, voire inférieure à 20 bar et de préférence comprise entre 1 et 12 bar, tout en faisant tourner lesdites deux vis à une vitesse comprise entre 20 et 120 révolutions par min (rpm), par exemple.

La pression exercée par la pompe sur le mélange pour le presser à travers la filière est de 50-120 bar, de préférence 80-120 bar, par exemple.

Il peut être utile, voire nécessaire de prévoir un dégazage du mélange en amont de ladite pompe, notamment par aspiration par un vide inférieur à 0,5 bar, de préférence inférieur ou égal à 0,2 bar, par exemple. Un tel dégazage est nécessaire dans le cas d'une fabrication de pâtes déshydratées, par opposition au cas d'une fabrication de pâtes fraîches, parce qu'il permet d'éviter un problème de craquèlement des pâtes au séchage. Il permet en particulier d'éviter la formation de fissures et/ou l'apparition de taches blanches, sinon inévitables, à la surface des pâtes, par exemple.

On réalise de préférence cette opération de dégazage à l'aide d'une prise d'aspiration par le vide dans des conditions telles qu'un chemin préférentiel pour une circulation d'air ne puisse pas s'établir au travers du mélange entre ladite prise d'aspiration par le vide et une entrée ou des entrées prévues pour l'alimentation des vis en farine ou semoule de céréale et/ou en eau.

Les pâtes extrudées selon la présente invention peuvent être ensuite déshydratées de manière traditionnelle connue de l'homme du métier. Elles peuvent également être apprêtées telles quelles, comme des pâtes fraîches, par exemple.

L'appareil selon la présente invention comprend donc un dispositif de mélange et/ou pétrissage, une pompe à engrenage et une filière d'extrusion. Il peut éventuellement comprendre aussi un dispositif de prémélange, comprenant notamment un mélangeur à ailettes rapide, lorsqu'il est destiné à la fabrication de pâtes alimentaires à partir de farine à granulométrie fine.

Ledit dispositif de mélange et/ou pétrissage comprend deux vis tournant dans le même sens et s'engrenant l'une dans l'autre, telles que les deux vis d'une extrudeuse ou d'un malaxeur bivis, par exemple.

Lesdites deux vis présentent en alternance et/ou en succession des zones de mélange, compression, pétrissage et/ou retenue. Ces zones peuvent être formées de manière adéquate en jouant sur la longueur et le sens du pas de vis, voire sur la forme des vis dans ces zones.

Lesdites deux vis peuvent comprendre en particulier deux arbres parallèles tournant dans le même sens sur lesquels sont enfilés et fixés les uns contre les autres des bilobes présentant chacun la forme d'une tranche de vis dont l'épaisseur peut être inférieure, égale ou supérieure au pas de vis. La longueur et le sens du pas de vis associé à un bilobe, de même que les positions angulaires respectives de deux bilobes successifs peuvent être choisis en fonction du type de travail ou d'opération que l'on désire réaliser dans la zone considérée.

Pour former une zone de mélange, on peut utiliser des bilobes à pas positif relativement long. Pour former une zone de compression, on peut utiliser des bilobes à pas positif relativement court. Pour former une zone de pétrissage, on peut utiliser des bilobes sans pas. Pour former une zone mixte de mélange et pétrissage, on peut utiliser des bilobes successifs à pas positif relativement long angulairement décalés. Enfin, pour former une zone de retenue, on peut utiliser des bilobes à pas négatif.

La forme des bilobes d'un malaxeur bivis vue dans le sens de l'axe des vis peut se distinguer de la forme correspondante des bilobes d'un extrudeur bivis par une largeur inférieure, qui laisse plus d'espace libre à disposition de la matière à traiter, à savoir à disposition dudit mélange de farine ou semoule de céréale et d'eau. A cette largeur inférieure des bilobes peut être associé un diamètre plus faible desdits axes ainsi qu'un rapport longueur/diamètre des vis plus faible, notamment un rapport compris entre 7 et 10 pour un malaxeur bivis comparé à un rapport compris entre 20 et 30 pour une extrudeuse bivis, par exemple.

Lesdites deux vis sont renfermées dans un fourreau à double paroi subdivisée en compartiments dans lesquels on peut faire circuler un fluide de refroidissement ou de réchauffement. Ce fourreau peut présenter à une extrémité amont une ou des entrées pour l'alimentation des vis en farine ou semoule de céréale et/ou en eau, et à une extrémité aval une sortie pour ledit mélange.

La pompe à engrenage peut comprendre deux roues dentées, ou rouleaux dentés qui s'engrènent l'un dans l'autre. Les deux rouleaux peuvent tourner dans un logement sur des axes situés dans un plan perpendiculaire à la direction d'un courant de pâte à extruder en provenance du dispositif de mélange et/ou pétrissage. Ils peuvent tourner chacun en sens inverse, les dents s'écartant en amont et se refermant en aval. Le bord extérieur des dents peut glisser contre une paroi intérieure correspondante dudit logement, définissant ainsi des espaces intersticiels destinés au transport de la pâte à extruder vers l'aval.

La forme des dents peut être spécialement conçue pour éviter au maximum tout frottement entre les dents qui s'engrènent et tout cisaillement sur la pâte transportée.

On prévoit de préférence des moyens d'entraînement indépendants, notamment des moteurs distincts, pour lesdites deux vis et pour la pompe. Une telle forme de réalisation préférée du présent appareil permet une mise en oeuvre du présent procédé particulièrement souple, car elle permet d'ajuster de manière indépendante la vitesse de rotation des vis de l'extrudeur ou du malaxeur et celle des rouleaux de la pompe, et elle permet de contrôler de manière indépendante divers paramètres essentiels tels que la durée et la température du pétrisssage et la pression d'extrusion, par exemple.

Une prise d'aspiration par le vide peut être prévue en amont de la pompe à engrenage. Ladite prise d'aspiration peut être branchée sur une dernière zone de mélange desdites deux vis, entre une zone de retenue, de compression ou de pétrissage et une extrémité aval des vis, à l'extrémité aval ou entre l'extrémité aval des vis et la pompe à engrenage, par exemple. Il importe en fait qu'au moins une zone de retenue, de compression ou de pétrissage soit prévue entre ladite prise d'aspiration par le vide et ladite ou lesdites entrées pour l'alimentation des vis en farine et/ou en eau, de manière à pouvoir assurer un bon remplissage des vis, autrement dit un bon compactage du mélange avant de le soumettre au dégazage.

On peut prévoir également dans la prise d'aspiration par le vide un dispositif de refoulement du mélange, notamment un bivis de refoulement destiné à refouler dans le dispositif de mélange et/ou pétrissage les particules de mélange qui auraient pu être aspirées malgré ledit compactage.

Ladite filière d'extrusion peut comporter un ou plusieurs conduits d'extrusion, notamment des conduits cylindriques, orientés généralement dans la même direction que celle d'un courant de pâte à extruder en provenance de la pompe à engrenage, de préférence dans une direction perpendiculaire au plan dans lequel sont situés les axes des rouleaux, par exemple. La forme des pâtes alimentaires extrudées peut être déterminée en particulier par la forme de l'ouverture ou de l'orifice de sortie desdits conduits.

La pompe à engrenage et la filière sont enfermées dans un manteau à double paroi subdivisé en compartiments dans lesquels on peut faire circuler un fluide de refroidissement ou de réchauffement.

L'appareil selon la présente invention est décrit plus en détails ci-après en référence au dessin annexé donné à titre d'exemple et dans lequel:
- la Figure 1 est une vue de côté en coupe longitudinale schématique d'une première forme de réalisation du présent appareil,
- la Figure 2 est une vue schématique de côté partiellement ouverte d'une deuxième forme de réalisation du présent appareil,
- la Figure 3 est une vue schématique de côté partiellement ouverte d'une troisième forme de réalisation du présent appareil,
- la Figure 4 est une vue schématique de dessus d'une vis de l'appareil représenté à la Figure 2,
- la Figure 5 est une vue schématique de dessus d'une vis de l'appareil représenté à la Figure 3,
- la Figure 6 est une vue en coupe transversale des deux vis de l'appareil représenté à la Figure 2, et
- la Figure 7 est une vue en coupe transversale des deux vis de l'appareil représenté à la Figure 3.

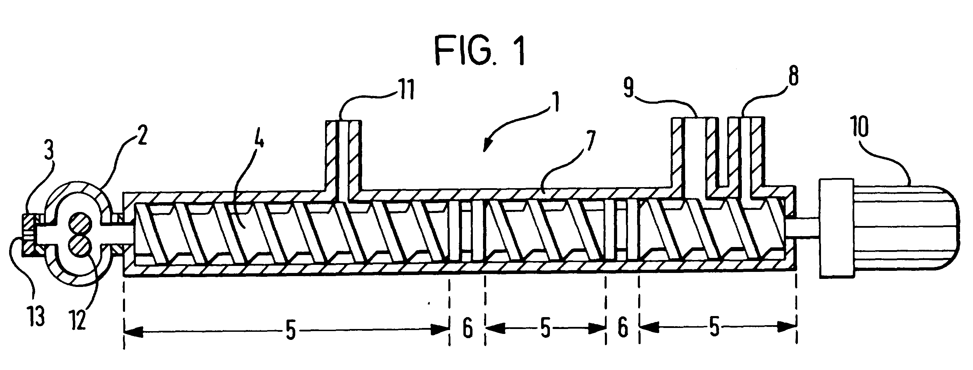

Dans la première forme de réalisation représentée à la Figure 1, le présent appareil comprend un dispositif de mélange et/ou pétrissage 1, une pompe à engrenage 2 et une filière 3 branchés en série en ligne droite.

Le dispositif de mélange et/ou pétrissage 1 comprend deux vis 4 tournant dans le même sens et s'engrenant l'une dans l'autre, à savoir les vis d'une extrudeuse bivis. Les vis présentent en alternance trois zones de mélange 5 et deux zones de pétrissage 6. Les vis sont renfermées dans un fourreau 7 présentant à son extrémité amont une entrée 8 pour l'alimentation en farine ou semoule de céréale et une entrée 9 pour l'alimentation en eau.

Les deux vis 4 sont entraînées par un moteur 10 distinct d'un moteur non représenté prévu pour entraîner la pompe à engrenage 2.

Une prise d'aspiration par le vide 11 traverse le fourreau 7 en amont de la pompe à engrenage 2. Cette prise est branchée sur la troisième et dernière zone de mélange 5, entre la deuxième zone de pétrissage 6 et l'extrémité aval des vis 4.

La filière 3 comprend une plaque parallèle au plan dans lequel sont situés les axes des rouleaux 12 de la pompe à engrenage 2. Ladite plaque est percée de plusieurs conduits d'extrusion cylindriques 13 orientés perpendiculairement audit plan.

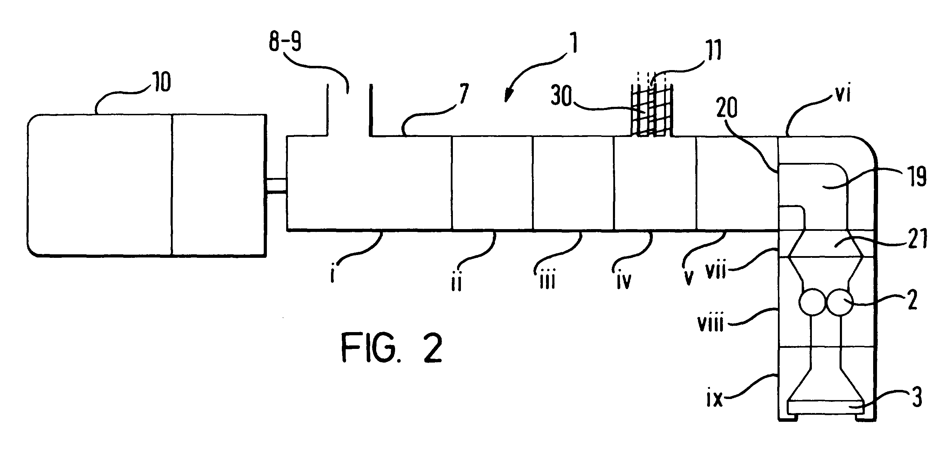

Dans la deuxième forme de réalisation représentée à la Figure 2, le présent appareil comprend un dispositif de mélange et/ou pétrissage 1, une pompe à engrenage 2 et une filière 3 branchés en série en ligne coudée vers le bas au niveau du branchement entre ledit dispositif et la pompe.

Le dispositif de mélange et/ou pétrissage 1 comprend deux vis tournant dans le même sens et s'engrenant l'une dans l'autre, à savoir les vis d'une extrudeuse bivis renfermées dans un fourreau 7 à double paroi subdivisée en cinq compartiments i-v dans lesquels on peut faire circuler un fluide de refroidissement ou de réchauffement. Le fourreau 7 présente à son extrémité amont une entrée 8-9 pour l'alimentation en farine ou semoule de céréale et pour l'alimentation en eau. Une prise d'aspiration par le vide 11 traverse le fourreau 7 en amont de la pompe à engrenage 2.

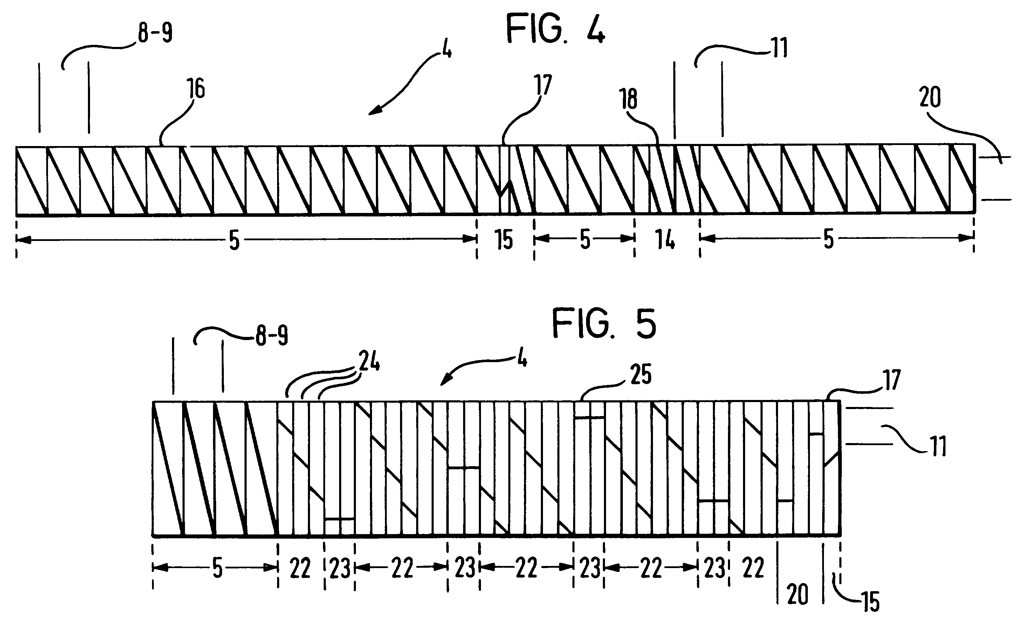

Comme on l'a indiqué à la Figure 4, cette prise 11 est branchée à cheval sur une zone de compression 14 et une dernière zone de mélange 5 desdites deux vis 4 dont une seule est représentée. Ces deux vis présentent trois zones de mélange 5 formées par des bilobes à pas de vis positif long 16. Une zone de retenue 15 comprenant un bilobe à pas négatif 17 est intercalée entre les deux premières zones de mélange.

Ladite zone de compression 14 comprend des bilobes à pas positif court 18. Elle est intercalée entre la deuxième et la troisième et dernière zone de mélange. Elle est destinée, de même que ladite zone de retenue 15, à assurer un bon remplissage des vis, autrement dit un bon compactage du mélange, de manière à éviter que des particules de mélange ne puissent être également aspirées par le vide.

Un dispositif de refoulement est prévu sous forme d'un bivis de refoulement 30 dans la prise d'aspiration par le vide 11. Il est destiné à refouler dans le dispositif de mélange et/ou pétrissage 1 les particules de mélange qui auraient pu être aspirées malgré ledit compactage.

Les deux vis 4 sont entraînées par un moteur 10 distinct d'un moteur non représenté prévu pour entraîner la pompe à engrenage 2. Cette dernière est branchée en amont sur la sortie frontale 20 du dispositif de mélange et/ou pétrissage 1 par l'intermédiaire d'une conduite 19 coudée à 90° et d'un raccord vertical 21. Les axes des deux rouleaux dentés de la pompe sont situés dans un plan horizontal.

La filière 3 comprend une plaque horizontale percée de conduits d'extrusion orientés dans une direction générale verticale.

La partie de l'appareil comprenant la conduite coudée 19, le raccord 21, la pompe 2 et la filière 3 est enfermée dans un manteau à double paroi subdivisé en quatre compartiments vi-ix dans lesquels on peut faire circuler un fluide de refroidissement ou de réchauffement.

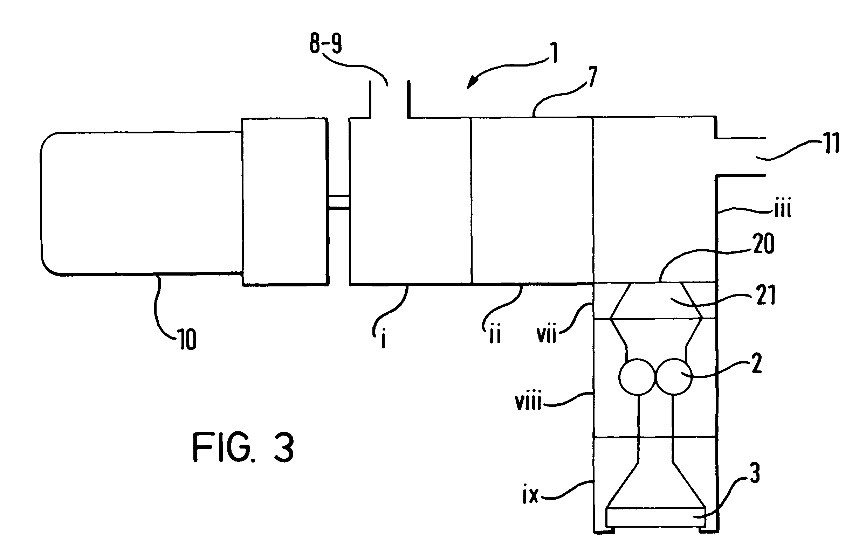

Dans la troisième forme de réalisation représentée à la Figure 3, le présent appareil comprend un dispositif de mélange et/ou pétrissage 1, une pompe à engrenage 2 et une filière 3 branchés en série en ligne brisée à angle droit vers le bas au niveau du branchement entre ledit dispositif et la pompe.

Le dispositif de mélange et/ou pétrissage 1 comprend deux vis tournant dans le même sens et s'engrenant l'une dans l'autre, à savoir les vis d'un malaxeur bivis renfermées dans un fourreau 7 à double paroi subdivisée en trois compartiments i-iii dans lesquels on peut faire circuler un fluide de refroidissement ou de réchauffement. Le fourreau 7 présente à son extrémité amont une entrée 8-9 pour l'alimentation en farine ou semoule de céréale et pour l'alimentation en eau.

Le fourreau 7 présente sur le dessous de son extrémité aval une sortie 20 destinée à laisser échapper vers le bas en direction de la pompe à engrenage 2 un courant vertical de pâte à extruder.

Comme on l'a indiqué à la Figure 5, lesdites deux vis 4 dont une seule est représentée présentent à leur extrémité amont une zone de mélange 5. Elles présentent ensuite en alternance cinq zones mixtes de mélange et pétrissage formées chacune de quelques bilobes 24 à pas positif relativement long angulairement décalés les uns par rapport aux autres, d'une part, et quatre zones de pétrissage 23 formées chacune de deux bilobes sans pas 25. Elles présentent à leur extrémité aval une zone de sortie correspondant à ladite sortie 20 et formée de deux bilobes sans pas 25 séparés par un espace 26. Ladite zone de sortie est suivie en aval par une zone de retenue 15 formée d'un bilobe de retenue 17 à pas négatif.

Les deux vis 4 sont entraînées par un moteur 10 distinct d'un moteur non représenté prévu pour entraîner la pompe à engrenage 2. Cette dernière est branchée en amont sur la sortie 20 du dispositif de mélange et/ou pétrissage 1 par l'intermédiaire d'un raccord vertical 21.

Une prise d'aspiration par le vide 11 est branchée à l'extrémité aval des vis 4 sur ladite zone de retenue 15, et plus précisément sur la face aval du bilobe de retenue 17.

Les axes des deux rouleaux dentés de la pompe 2 sont situés dans un plan horizontal.

La filière 3 comprend une plaque horizontale percée de conduits d'extrusion orientés dans une direction générale verticale.

La partie de l'appareil comprenant ledit raccord 21, la pompe 2 et la filière 3 est enfermée dans un manteau à double paroi subdivisé en trois compartiments vii-ix dans lesquels on peut faire circuler un fluide de refroidissement ou de réchauffement.

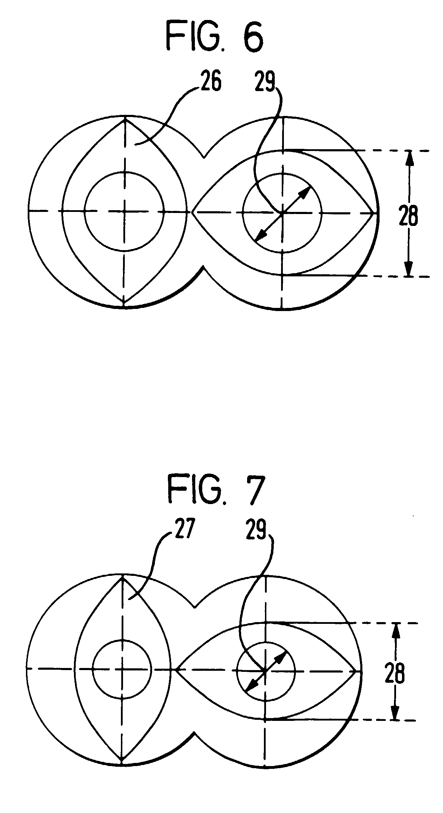

Les Figures 6 et 7 montrent que, vue dans le sens de l'axe des vis, la forme des bilobes 27 d'un malaxeur bivis peut se distinguer de la forme correspondante des bilobes 26 d'un extrudeur bivis par une largeur 28 inférieure, qui laisse plus d'espace libre à disposition de la matière à traiter, à savoir à disposition dudit mélange de farine ou semoule de céréale et d'eau. A cette largeur inférieure des bilobes 27 peut être associé un diamètre 29 plus faible desdits axes ainsi qu'un rapport longueur/diamètre des vis plus faible (cf Figures 4 et 5).

Le procédé selon la présente invention est décrit plus en détails dans les exemples présentés ci-après à titre d'illustration. Les pourcentages y sont donnés en poids.

### Exemple 1

On utilise un appareil correspondant à la première forme de réalisation présentée à la Figure 1, dans lequel le dispositif à deux vis s'engrenant l'une dans l'autre et tournant dans le même sens, autrement dit le bivis et son fourreau sont ceux d'une extrudeuse WERNER & PFLEIDERER® type Continua C37®, la pompe à engrenage est une pompe MAAG PUMP SYSTEMS® type EXTREX 22/22®. On alimente cet appareil avec de l'eau et de la semoule de blé dur présentant une granulométrie comprise entre 250 et 350 µm.

On prépare ainsi et on pétrit 39,9 kg/h d'un mélange de semoule et d'eau présentant une teneur en eau de 33% (30 kg/h de semoule + 9,9 kg/h d'eau). On dégaze le mélange, en amont de la pompe, par aspiration par un vide de 0,2 bar. Le temps de séjour du mélange dans le bivis est d'environ 60 s. On extrude le mélange au travers d'une filière présentant des conduits d'extrusion cylindriques de 1,85 mm de diamètre.

Pour comparaison, on réalise une fabrication de pâtes alimentaires sans pompe à engrenage, tout en maintenant la puissance développée par le moteur d'entraînement du bivis (Wᵥᵢₛ) égale à la somme des puissances développées pour la présente fabrication selon l'invention par le même moteur, d'une part, et par le moteur d'entraînement de la pompe à engrenage (Wₚₒₘₚₑ), d'autre part. Pour ce faire, on réduit le débit de mélange à travers l'appareil sans pompe à engrenage à 26,6 kg/h (20 kg/h de semoule + 6,6 kg/h d'eau) en adaptant en conséquence la vitesse de rotation des vis.

Avec chacune de ces fabrications, on obtient des pâtes alimentaires, à savoir des spaghetti, dont les qualités organoleptiques sont comparables à celles de spaghetti préparés de manière traditionnelle et présentant notamment une couleur jaune attrayante sans aucun point blanc.

Cependant, les réglages précis de la vitesse de rotation des vis et du couple développé par le moteur qui les entraîne, de même que la température présentée par le mélange et la pression régnant en différents endroits de l'appareil varient de manière significative selon les fabrications.

Les paramètres suivants ont été ajustés et/ou déterminés lors de ces fabrications:
- la pression avant la pompe à engrenage (pₚₒₘₚₑ)
- la pression avant la filière (p_{filière})
- la vitesse de rotation des vis (nᵥᵢₛ)
- la vitesse de rotation des rouleaux dentés de la pompe (nₚₒₘₚₑ)
- la température du mélange à la sortie des vis (T_{mélange})
- la température des pâtes à la sortie de la filière (T_{pâtes})
- la puissance développée par le moteur des vis (Wᵥᵢₛ)
- la puissance développée par le moteur de la pompe (Wₚₒₘₚₑ)
- la consommation spécifique d'énergie par kg de pâtes produites (Eₛ)

Les valeurs prises par ces paramètres lors de ces fabrications sont réunies et présentées dans le tableau 1 ci-après:

**Tableau 1**

| | comparaison | invention |
|---|---|---|
| pₚₒₘₚₑ(bar) | - | 30 |
| p_{filière} (bar) | 55 | 50 |
| nᵥᵢₛ (rpm) | 27 | 35 |
| nₚₒₘₚₑ (rpm) | - | 123 |
| T_{mélange} (°C) | 40 | 40 |
| T_{pâtes} (°C) | 40 | 50 |
| Wᵥᵢₛ (kW) | 6,46 | 6,08 |
| Wₚₒₘₚₑ (kW) | - | 0,45 |
| Eₛ (kJ/kg) | 874 | 589 |

Ce tableau montre que l'utilisation d'une pompe à engrenage selon le procédé et dans l'appareil selon la présente invention permet de réduire nettement l'énergie consommée pour produire un kg de pâtes alimentaires, par comparaison avec un procédé et un appareil par ailleurs semblables mais ne comportant pas l'usage d'une pompe à engrenage.

### Exemples 2-4

On utilise un appareil correspondant à la deuxième forme de réalisation présentée aux Figures 2, 4 et 6, dans lequel le dispositif à deux vis s'engrenant l'une dans l'autre et tournant dans le même sens, autrement dit le bivis et son fourreau sont ceux d'une extrudeuse WERNER & PFLEIDERER® type C58® et la pompe à engrenage est une pompe MAAG® type VACOREX 45/45®. On alimente cet appareil avec de l'eau et de la semoule de blé dur présentant une granulométrie comprise entre 250 et 300 µm.

On prépare ainsi et on pétrit un mélange de semoule et d'eau présentant une teneur en eau de 31%. On dégaze le mélange en amont de la pompe par aspiration par un vide de 0,2 bar. Le temps de séjour du mélange dans le bivis est d'environ 45 s. On extrude le mélange au travers d'une filière présentant des orifices d'extrusion de section circulaire de 1,85 mm de diamètre.

Par circulation d'un fluide de refroidissement et/ou réchauffement, on maintient une température de 25°C dans les quatre premiers compartiments i-iv du fourreau du bivis, une température de 30°C dans le dernier compartiment v du fourreau, et une température de 45°C dans le compartiment ix renfermant la filière.

Dans ces conditions, on réalise trois fabrications au cours desquelles les paramètres définis à l'exemple 1 et les quantités de semoule et d'eau utilisées prennent les valeurs présentées dans le tableau 2 ci-après:

**Tableau 2**

| | Exemple 2 | Exemple 3 | Exemple 4 |
|---|---|---|---|
| semoule (kg/h) | 105 | 115 | 125 |
| eau (kg/h) | 31,5 | 34,5 | 37,5 |
| pₚₒₘₚₑ(bar) | 8-12 | 8 | 9 |
| p_{filière} (bar) | 100-104 | 104-106 | 96-100 |
| nᵥᵢₛ (rpm) | 90 | 95 | 100 |
| nₚₒₘₚₑ (rpm) | 39 | 44 | 46 |
| T_{mélange} (°C) | 39,4 | 39,6 | 41 |
| T_{pâtes} (°C) | 46,6 | 48 | 50 |

Avec ces fabrications, on obtient des pâtes alimentaires, à savoir des spaghetti, qui présentent une couleur jaune attrayante sans aucun point blanc et dont les qualités organoleptiques sont comparables à celles de spaghetti préparés de manière traditionnelle.

### Exemples 5 et 6

On procède de la manière décrite aux exemples 2-4, à l'exception du fait que l'on alimente l'appareil avec un prémélange (préparé avec un mélangeur rapide) d'eau et de farine de blé tendre présentant une granulométrie de 50-150 µm.

Dans ces conditions, on réalise deux fabrications au cours desquelles les paramètres définis à l'exemple 1 et les quantités de farine et d'eau utilisées, de même que la teneur en eau du mélange prennent les valeurs présentées dans le tableau 3 ci-après:

**Tableau 3**

| | Exemple 5 | Exemple 6 |
|---|---|---|
| farine (kg/h) | 75 | 85 |
| eau (kg/h) | 25,2 | 26 |
| teneur en eau (%) | 33 | 31 |
| pₚₒₘₚₑ(bar) | 12 | 10 |
| p_{filière} (bar) | 85-90 | 85-90 |
| nᵥᵢₛ (rpm) | 85 | 90 |
| nₚₒₘₚₑ (rpm) | 29 | 33 |
| T_{mélange} (°C) | 39,7 | 40,8 |
| T_{pâtes} (°C) | 48 | 52 |

Avec ces fabrications, on obtient des pâtes alimentaires, à savoir des spaghetti, qui présentent une couleur crème attrayante sans aucun point blanc et dont les qualités organoleptiques sont très proches de celles de spaghetti préparés de manière traditionnelle.

### Exemple 7

On utilise un appareil correspondant à la troisième forme de réalisation présentée aux Figures 3, 5 et 7, dans lequel le dispositif à deux vis s'engrenant l'une dans l'autre et tournant dans le même sens, autrement dit le bivis et son fourreau sont ceux d'un malaxeur READCO® taille 125 mm x 100 mm et la pompe à engrenage est une pompe MAAG® type VACOREX 90/90®. On alimente cet appareil avec de l'eau et de la semoule de blé dur présentant une granulométrie comprise entre 250 et 300 µm.

On prépare ainsi et on pétrit un mélange de semoule et d'eau présentant une teneur en eau de 30%. On dégaze le mélange en amont de la pompe par aspiration par un vide de 0,2 bar. Le temps de séjour du mélange dans le bivis est d'environ 45 s. On extrude le mélange au travers d'une filière présentant des orifices d'extrusion de section circulaire de 1,85 mm de diamètre.

Par circulation d'un fluide de réchauffement, on maintient une température de 48°C dans les trois compartiments i-iii du fourreau du bivis et dans le compartiment ix renfermant la filière.

Dans ces conditions, on réalise une fabrication au cours de laquelle les paramètres définis à l'exemple 1 et les quantités de semoule et d'eau utilisées prennent les valeurs présentées dans le tableau 2 ci-après:

**Tableau 4**

| | Exemple 7 |
|---|---|
| semoule (kg/h) | 800 |
| eau (kg/h) | 200 |
| pₚₒₘₚₑ(bar) | 8 |
| p_{filière} (bar) | 110 |
| nᵥᵢₛ (rpm) | 70 |
| nₚₒₘₚₑ (rpm) | 36 |
| T_{mélange} (°C) | 39 |
| T_{pâtes} (°C) | 48 |

Avec cette fabrication, on obtient des pâtes alimentaires, à savoir des spaghetti, qui présentent une couleur jaune attrayante sans aucun point blanc et dont les qualités organoleptiques sont comparables, voire supérieures à celles de spaghetti préparés de manière traditionnelle.

### Exemple 8

On prépare des pâtes avec de la semoule de blé dur de la manière décrite à l'exemple 3, à l'exception du fait que l'on utilise une filière dont les conduits présentent d'une part une configuration provoquant une incurvation de la pâte extrudée et d'autre part un orifice de sortie en forme de s, tels que la pâte extrudée s'enroule en forme d'hélice autour de son axe.

Les pâtes ainsi extrudées présentent une épaisseur de paroi de 0,75 mm et un diamètre apparent de 6 mm. On les découpe en tronçons de 4-5 cm de longueur à l'aide d'un couteau rotatif appuyant contre la filière. On obtient des pâtes courtes en forme d'hélices qui présentent une couleur jaune à la fois intense et translucide, sans aucun point blanc et dont les qualités organoleptiques sont comparables, voire supérieures à celles d'hélices préparées de manière traditionnelle.

En effet, pour comparaison, on prépare des pâtes traditionnelles analogues avec la même filière, mais avec un appareil comportant un mélangeur, un pétrin et une presse traditionnels. On obtient des pâtes courtes en forme d'hélices qui présentent une couleur jaune clair plutôt mat, sans aucun point blanc.

On cuit des échantillons de ces pâtes durant 4,5 min dans de l'eau bouillante salée. Les résultats d'une appréciation visuelle et d'une dégustation de ces pâtes par des dégustateurs avertis sont présentés dans le tableau 5 ci-après:

**Tableau 5**

| | hélices traditionnelles, pour comparaison | hélices selon l'invention |
|---|---|---|
| couleur des pâtes crues | jaune clair plutôt mat | jaune plus intense plutôt translucide |
| couleur des pâtes cuites | jaune clair brillant | jaune clair encore plus brillant |
| texture des pâtes cuites | *al dente* | encore plus ferme |

### Exemple 9

On prépare des pâtes courtes en forme d'hélice de manière analogue à celle décrite à l'exemple 8, à l'exception du fait que l'on utilise une farine de blé tendre dans les conditions décrites à l'exemple 6, au lieu d'une semoule de blé dur.

Pour comparaison, on prépare des pâtes analogues avec la même filière, mais avec un appareil comportant un mélangeur, un pétrin et une presse traditionnels.

On cuit des échantillons de ces pâtes courtes en forme d'hélices durant 4,5 min dans de l'eau bouillante salée. Les résultats d'une appréciation visuelle et d'une dégustation de ces pâtes par des dégustateurs avertis sont présentés dans le tableau 6 ci-après:

**Tableau 6**

| | hélices pour comparaison | hélices selon l'invention |
|---|---|---|
| couleur des pâtes crues | blanc cassé brun plutôt mat | blanc cassé brun plutôt translucide |
| couleur des pâtes cuites | blanc | blanc plus brillant |
| texture des pâtes cuites | pas tout à fait *al dente* | *al dente* |

## Revendications

1. Procédé de fabrication de pâtes alimentaires, dans lequel on prépare un mélange de farine ou semoule de céréale et d'eau présentant une teneur en eau de 25-40%, on pétrit le mélange et on l'extrude, les opérations de mélange et/ou pétrissage étant réalisées dans un dispositif à deux vis tournant dans le même sens et s'engrenant l'une dans l'autre et la température du mélange étant tenue à une température inférieure à 55°C durant toutes les opérations, caractérisé par le fait que l'on extrude le mélange en le pressant au travers d'une filière d'extrusion à l'aide d'une pompe à engrenage, on maintient en amont de la pompe une pression inférieure ou égale à 30 bar et la pression exercée par la pompe sur le mélange pour le presser au travers de la filière est de 50-120 bar.

2. Procédé selon la revendication 1, dans lequel lesdites deux vis sont les vis d'une extrudeuse ou d'un malaxeur bivis.

3. Procédé selon la revendication 2, dans lequel on réalise lesdites opérations de mélange et/ou pétrissage en 20-60 s.

4. Procédé selon la revendication 1, dans lequel ladite farine de céréale présente une granulométrie de 50-150 um ou ladite semoule de céréale présente une granulométrie de 250-350 um.

5. Procédé selon la revendication 1, dans lequel on dégaze le mélange en amont de la pompe à engrenage par aspiration par un vide inférieur à 0,5 bar.

6. Appareil pour la mise en oeuvre du procédé selon l'une des revendications 1 à 5, qui comprend un dispositif de mélange et/ou pétrissage (1) comprenant deux vis (4) tournant dans le même sens et s'engrenant l'une dans l'autre, et une filière d'extrusion (3), les vis (4) présentant en alternance et/ou en succession des zones de mélange (5), compression (14), pétrissage (6) et/ou retenue (15), caractérisé par le fait qu'il comprend en outre une pompe à engrenage (2), lesdites deux vis (4) sont renfermées dans un fourreau à double paroi (7) subdivisée en compartiments (i-v) dans lesquels on peut faire circuler un fluide de refroidissement ou de réchauffement, et la pompe à engrenage (2) et la filière (3) sont enfermées dans un manteau à double paroi (7) subdivisé en compartiments (vii-ix) dans lesquels on peut faire circuler un fluide de refroidissement ou de réchauffement.

7. Appareil selon la revendication 6, dans lequel ledit dispositif de mélange et/ou pétrissage (1) comprend les deux vis (4) d'une extrudeuse ou d'un malaxeur bivis.

8. Appareil selon la revendication 7, dans lequel lesdites vis (4) présentent un rapport longueur/diamètre compris entre 20 et 30 pour une extrudeuse bivis ou entre 7 et 10 pour un malaxeur bivis.

9. Appareil selon la revendication 6, comprenant une prise d'aspiration par le vide (11) en amont de la pompe à engrenage (2).

10. Appareil selon la revendication 7, dans lequel ledit fourreau (7) présente à une extrémité amont des entrées (8-9) pour l'alimentation en farine ou semoule de céréale et/ou en eau.

## Patentansprüche

1. Verfahren zur Herstellung von Teigwaren, bei dem man eine Mischung von Getreidemehl oder -grieß mit Wasser mit einem Wassergehalt von 25-40% herstellt, die Mischung knetet und extrudiert, wobei die Verarbeitungsschritte des Mischens und/oder Knetens in einer Vorrichtung erfolgen, die zwei Schnecken aufweist, die sich im gleichen Sinne drehen und miteinander im Eingriff sind, und die Temperatur der Mischung während aller Verarbeitungsschritte unter einer Temperatur von 55°C gehalten wird, dadurch gekennzeichnet, daß man die Mischung extrudiert, indem man sie mit Hilfe einer Zahnradpumpe durch eine Extrusionsdüse preßt, wobei man stromauf der Pumpe einen Druck von weniger als oder gleich 30 bar einhält und der Druck, der von der Pumpe auf die Mischung zum Hindurchpressen durch die Düse ausgeübt wird, von 50-120 bar beträgt.

2. Verfahren nach Anspruch 1, bei dem die beiden Schnecken die Schnecken eines Zweischneckenextruders oder -knetwerks sind.

3. Verfahren nach Anspruch 2, bei dem man die Verarbeitungsschritte des Mischens und/oder Knetens in 20-60 s durchführt.

4. Verfahren nach Anspruch 1, bei dem das Getreidemehl eine Teilchengrößenverteilung von 50-150 µm oder der Getreidegrieß eine Teilchengrößenverteilung vom 250-350 mm aufweisen.

5. Verfahren nach Anspruch 1, bei dem man die Mischung stromauf der Zahnradpumpe durch Absaugen mit einem Unterdruck von weniger als 0,5 bar entgast.

6. Vorrichtung zur Durchführung des Verfahrens nach einem der Ansprüche 1 bis 5, die eine Misch- und/oder Knetvorrichtung (1), die zwei Schnecken (4) aufweist, die sich im gleichen Sinne drehen und miteinander im Eingriff sind, sowie eine Extrusionsdüse (3) aufweist, wobei die Schnecken (4) alternierend und/oder hintereinander Misch- (5), Kompressions- (14), Knet- (6) und/oder Haltezonen (15) aufweisen, dadurch gekennzeichnet, daß sie außerdem eine Zahnradpumpe (2) aufweist, daß die beiden Schnecken (4) von einer doppelwandigen Hülle (7) umschlossen sind, die in Abteile (i-v) unterteilt ist, durch die man ein Kühl- oder Heizfluid zirkulieren lassen kann, und die Zahnradpumpe (2) und die Düse (3) von einem doppelwandigen Mantel (7) umschlossen sind, der in Abteile (vii-ix) unterteilt ist, durch die man ein Kühl- oder Heizfluid zirkulieren lassen kann.

7. Vorrichtung nach Anspruch 6, bei der die Misch- und/oder Knetvorrichtung (1) die beiden Schnecken (4) eines Zweischneckenextruders oder -knetwerks aufweist.

8. Vorrichtung nach Anspruch 7, bei der die Schnecken (4) ein Verhältnis von Länge zu Durchmesser zwischen 20 und 30 im Falle eines Zweischneckenextruders oder zwischen 7 und 10 im Falle eines Zweischneckenknetwerks aufweisen.

9. Vorrichtung nach Anspruch 6, die einen Unterdruck-Abzug (11) stromauf der Zahnradpumpe (2) aufweist.

10. Vorrichtung nach Anspruch 7, bei der die Hülle (7) ein äußerstes Ende stromauf der Einlässe (8-9) für die Einspeisung des Getreidemehls oder -grießes und/oder Wassers aufweist.

## Claims

1. Process for producing pasta, wherein a mixture of cereal flour or semolina and water is prepared having a water content of 25-40 %, the mixture is kneaded and extruded, the mixing and/or kneading operations being carried out in a device with two screws rotating in the same direction and meshing one in the other, and the mixing temperature being held at a temperature below 55°C during all the operations, characterized in that the mixture is extruded by pressing it through an extrusion die with the aid of a gear pump, a pressure is maintained upstream from the pump lower than or equal to 30 bar and the pressure exerted by the pump on the mixture in order to press it through the die is from 50-120 bar.

2. Process according to claim 1, wherein the said two screws are the screws of a twin-screw extruder or blender.

3. Process according to claim 2, wherein the said mixing and/or kneading operations are performed in 20-60 s.

4. Process according to claim 1, wherein the said cereal flour has a particle size of 50-150 µm or the said cereal semolina has a particle size of 250-350 µm.

5. Process according to claim 1, wherein the mixture is degassed upstream from the gear pump by extraction with a vacuum of below 0.5 bar.

6. Apparatus for implementing the process according to one of claims 1 to 5, which comprises a mixing and/or kneading device (1) comprising two screws (4) rotating in the same direction and meshing one in the other, and an extrusion die (3), the screws (4) having alternating and/or successive mixing (5), compressing (14), kneading (6) and/or holding (15) zones, characterized in that it additionally includes a gear pump (2), the said two screws (4) are enclosed in a sleeve with a double wall (7) subdivided into compartments (i-v) in which a cooling or heating fluid can be circulated, and the gear pump (2) and the die (3) are enclosed in a double-walled jacket (7) subdivided into compartments (vii-ix) in which a cooling or heating fluid can be circulated.

7. Apparatus according to claim 6, wherein the said blending and/or kneading device (1) comprises the two screws (4) of a twin-screw extruder or blender.

8. Apparatus according to claim 7, wherein the said screws (4) have a length/diameter ratio of between 20 and 30 for a twin-screw extruder or between 7 and 10 for a twin-screw blender.

9. Apparatus according to claim 6, including a vacuum extraction point (11) upstream from the gear pump (2).

10. Apparatus according to claim 7, wherein the said sleeve (7) has an end upstream from the inlets (8-9) for feeding in cereal flour or semolina and/or water.
